(19) Europäisches Patentamt
European Patent Office
Office européen des brevets

(11) Veröffentlichungsnummer : **0 014 962**
**B1**

(12) # EUROPÄISCHE PATENTSCHRIFT

(45) Veröffentlichungstag der Patentschrift : **22.09.82**

(51) Int. Cl.$^3$ : **C 09 B 67/20**, C 09 D 11/02

(21) Anmeldenummer : **80100746.9**

(22) Anmeldetag : **14.02.80**
**Die Akte enthält technische Angaben, die nach dem Eingang der Anmeldung eingereicht wurden und die nicht in dieser Patentschrift enthalten sind.**

(54) **Phthalocyaninzubereitungen und diese Zubereitungen enthaltende Offsetdruckfarben.**

(30) Priorität : **17.02.79 DE 2906157**

(43) Veröffentlichungstag der Anmeldung : **03.09.80 (Patentblatt 80/18)**

(45) Bekanntmachung des Hinweises auf die Patenterteilung : **22.09.82 Patentblatt 82/38**

(84) Benannte Vertragsstaaten : **CH DE FR GB IT**

(56) Entgegenhaltungen :
**DE A 2 041 033**
**DE A 2 132 456**
**FR A 1 385 244**
**FR A 1 600 815**
**US A 2 699 443**

(73) Patentinhaber : **BASF Aktiengesellschaft**
**Carl-Bosch-Strasse 38**
**D-6700 Ludwigshafen (DE)**

(72) Erfinder : **Sappok, Reinhard, Dr.**
**Langgarten 15**
**D-6900 Heidelberg (DE)**
Erfinder : **Kranz, Joachim, Dr.**
**Rheinrugenstrasse 22**
**D-6700 Ludwigshafen (DE)**

**EP 0 014 962 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Phthalocyaninzubereitungen und diese Zubereitungen enthaltende Offsetdruckfarben

Die Erfindung betrifft Phthalocyaninzubereitungen und diese Zubereitungen enthaltende Offsetdruckfarben. Bei der Synthese fällt Kupferphthalocyanin (CuPc) in der Regel in der β-Modifikation und in grobkristalliner Form an. Solche rohen CuPc sind für die Pigmentierung von Druckfarben von geringem Wert, weshalb das rohe CuPc vor des coloristischen Anwendung zunächst in eine Pigmentform (d.h. in eine coloristisch wertvolle Form) überführt wird. Hierzu wird das Rohprodukt z.B. Roh-CuPc oder Rohphthalocyanin in geeigneten Mahl- und Zerkleinerungsmaschinen wie Kugelmühlen, Schwingmühlen, Reibemühlen oder in Knetern in Gegenwart großer Mengen an anorganischen Salzen wie Kochsalz, Glaubersalz, Calciumchlorid in Gegenwart oder Abwesenheit geringer Mengen an organischen Flüssigkeiten trocken zerkleinert. Das Mahlgut wird danach in Wasser eingetragen, das Pigment von der Salzlösung abfiltriert, salzfrei gewaschen und getrocknet.

Die Überführung in die Pigmentform kann auch so erfolgen, daß man das rohe CuPc zunächst in Kugel- oder Schwingmühlen in Abwesenheit von Mahlhilfsmitteln wie Salz und organischen Flüssigkeiten intensiv mahlt. Das Mahlgut besteht aus bis zu 200 µm großen Agglomeraten, die im wesentlichen aus 0,01 bis 0,05 µm großen Primärteilchen aufgebaut sind.

Anschließend wird das Mahlgut in organische Flüssigkeiten wie Alkohole, Ester, Äther, Ketone oder in Gemische dieser Flüssigkeiten mit Wasser eingetragen und rekristallisiert. Die Pigmentform wird isoliert und getrocknet.

Die nach beiden Formierungsverfahren erhaltenen Pigmentformen des Phthalocyanins liegen als sehr feinteilige Pulver mit Primärteilchen von 0,05 bis 0,1 µm vor, die jedoch bei der Trockung reagglomeriert sind. Um optimale coloristische Eigenschaften zu erzielen, müssen die in dem Pigmentpulver enthaltenen Agglomerate durch Dispergieren in den Anwendungsmedien wieder desagglomeriert werden, wozu Energie aufgewendet werden muß. Die geschilderten Verfahren sind aufwendig und haben den Nachteil, daß verdünnte Salzlösungen als Abwasser und/oder organische Flüssigkeiten bei der Aufarbeitung und Rückgewinnung ins Abwasser gehen und/oder in die Luft emittiert werden.

In der DE-A-21 32 546 ist ein Verfahren beschrieben, nach dem Pigmentpasten durch direktes Einarbeiten von trocken gemahlenem Rohpigment erhalten werden. Man erhält mit den Pigmentpasten sehr farbstarke und reine Färbungen liefernde Druckfarben. Bei hochviskosen mineralölhaltigen Lösungen von Druckfarbenbindemitteln wie sie z.B. zur Herstellung von Offsetdruckfarben verwendet werden, ist jedoch ein mehrstündiges Tempern der Mischung aus der Lösung der Druckfarbenbindemittel und dem Mahlgut bei Temperaturen um 70 °C und wegen der hohen Viskosität der Bindemittellösung intensives Dispergieren erforderlich.

Aufgabe der vorliegenden Erfindung war es, eine Phthalocyaninzubereitung zu entwickeln, welche in den hochviskosen mineralölhaltigen Lösungen von Druckfarbenbindemitteln, wie sie z.B. insbesondere für den Offsetdruck verwendet werden, die geschilderten Nachteile nicht oder nur in deutlich geringerem Maße aufweist.

Es wurde gefunden, daß man einwandfreie Offsetdruckfarben erhält, wenn man zur Herstellung Phthalocyaninzubereitungen anwendet, die durch trockenes Mahlen von

a) Phthalocyanin und

b) 2 bis 20 Gew.%, bezogen auf a), eines oder mehrerer Harnstoffderivate der allgemeinen Formel

$$K\text{—}(\text{—NHCO—NH—R})_2 \qquad (I),$$

in der K 1,5-Naphthylen oder 4,4'-Diphenylenmethan, R $C_{12}$- bis $C_{18}$-Alkyl, $C_{12}$- bis $C_{18}$-Alkenyl, 3-($C_8$- bis $C_{18}$-Alkoxy)-propyl,

bedeuten,

in Abwesenheit von Mahlhilfsmitteln erhalten werden.

Mit den Zubereitungen gemäß der Erfindung erhält man blaue Druckfarben, die bei gleichem Pigmentgehalt farbstärkere Drucke in reineren Farbtönen geben als die mit Pigmenten des Standes der Technik erhältlichen Druckfarben.

Die Kupferphthalocyaninzubereitungen, welche die aus der DE-A-2 041 033 bekannten Bisharnstoffe auf der Basis Toluylendiisocyanat oder Hexamethylendiisocyanat enthalten, sind zu den Zubereitungen gemäß der vorliegenden Erfindung als nächstliegender Stand der Technik anzusehen. Weiterhin zeigen die mit den erfindungsgemäßen Zubereitungen hergestellten Offsetdruckfarben eine geringere Körnigkeit als solche mit Pigmenten des Standes der Technik hergestellte Offsetdruckfarben. Die Zubereitungen können als b) auch Gemische aus zwei und mehr Verbindungen der Formel I enthalten.

Die Zubereitungen gemäß der Erfindung werden durch gemeinsames trockenes Mahlen von a) und b) in Kugelmühlen, Schwingmühlen und ähnlich wirkenden Zerkleinerungsmaschinen hergestellt. Dabei ist es gleichgültig, ob zunächst das Phthalocyanin allein gemahlen und zu einem späteren Zeitpunkt b) zugegeben und eingemahlen wird oder ob eine Mischung aus Phthalocyanin und b) zusammen gemahlen wird. Das Mahlen erfolgt in Abwesenheit von Mahlhilfsmitteln wie Steinsalz, Natriumsulfat, Calciumchlorid.

Ein einfaches Mischen von feingemahlenen a) mit b) in Schaufelmischern oder durch Rollen in

Trommeln, ergibt eine Zubereitung, die im Vergleich zum Stand der Technik nur eine geringe Verbesserung in Offsetdruckfarben zeigt.

Als Phthalocyanine a) kommen metallfreies Phthalocyanin und vor allem halogenfreies bis praktisch halogenfreies Kupferphthalocyanin (CuPc) in Betracht. Als praktisch halogenfreies CuPc wird CuPc bezeichnet, das im Mittel bis zu 0,2 Halogenatome wie Chlor- oder Bromatome im Molekül CuPc enthalten kann. Die Phthalocyanine a) werden vorzugsweise in Form des grobkristallisierten Rohpigments angewendet.

In den Harnstoffderivaten der Formel I kommen für R z.B. im einzelnen in Betracht

α) R = $C_{12}$- bis $C_{18}$-Alkyl oder Alkenyl : Dodecyl, Isododecyl, Tridecyl, Hexadecyl, Octadecyl, Oleyl ;

β) R = 3-($C_8$- bis $C_{18}$-Alkoxy) propyl : 3-(2'-Äthylhexoxy)-propyl, 3-n-Octoxypropyl, 3-Nonoxypropyl, 3-Decoxypropyl, 3-Undecoxypropyl, 3-Dodecoxypropyl, 3-Tetradecoxypropyl, 3-Pentadecoxypropyl, 3-Hexadecoxypropyl, 3-Octadecoxypropyl ;

Als Harnstoffderivate der Formel I sind aus anwendungstechnischen und coloristischen Gründen solche bevorzugt, in denen K 1,5-Naphthylen oder 4,4'-Diphenylenmethan und R die unter α) und β) angegebenen Reste bedeuten.

Besonders bevorzugt sind Zubereitungen die als Harnstoffderivate b) solche der Formel

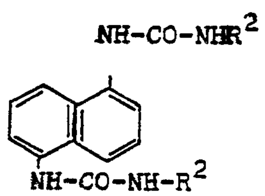

oder

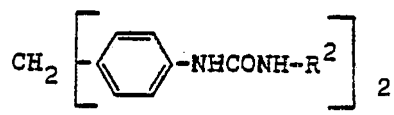

enthalten, in der $R^2$ für Tridecyl oder für 3(2'-Äthylhexoxy)-propyl steht, da mit diesen Zubereitungen besonders vorteilhafte Druckfarben hinsichtlich der Farbstärke, der Reinheit des Farbtons und der Feinverteilung des Pigments erhalten werden.

Die Menge an dem oder den Harnstoffderivaten b) beträgt mindestens 2 Gew.%, bezogen auf a). Die obere Anwendungsmenge liegt bei etwa 20 Gew.%, bezogen auf a).

Man kann auch größere Mengen an b) anwenden, jedoch werden bei der Anwendung im Vergleich zur genannten oberen Menge keine Vorteile mehr erzielt.

Vorzugsweise liegt der Anteil an b) zwischen 5 und 15, insbesondere zwischen 7 und 12 Gew.%, bezogen auf a).

Die Verbindungen der allgemeinen Formel I werden durch Umsetzen der entsprechenden Isocyanate mit 2 Mol Amin der allgemeinen Formel $R-NH_2$, worin R die oben angegebene Bedeutung hat, nach bekannten Verfahren hergestellt. Verwendet man bei der Umsetzung Gemische verschiedener Amine, so erhält man Gemische.

Die Erfindung wird durch die folgenden Beispiele zusätzlich erläutert. Die Prozentangaben beziehen sich auf das Gewicht.

Beispiel 1

a) Zubereitung : In einer Kugelmühle (Volumen 50 l ; Füllung : 50 kg Eisenkugeln mit 2 bis 3 cm Durchmesser) werden 4,5 kg chlorfreies Rohkupferphthalocyanin (β-Modifikation) und 0,5 kg

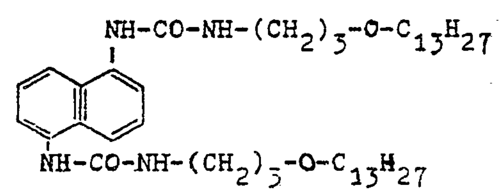

eingefüllt und 25 Stunden bei 25 °C gemahlen. Man erhält ein Mahlgut, in dem 65 % des CuPc in der α-Modifikation vorliegen. Das Mahlgut liegt in Form von 0,5 bis etwa 200 μm großen Agglomeraten vor, die aus 0,01 bis 0,05 μm großen Primärteilchen aufgebaut sind.

b) Vergleichspigment : das gleiche Roh-CuPc wurde wie unter a) jedoch in Abwesenheit des Harnstoffderivates gemahlen.

c) Coloristische Prüfung (Offsetdruckfarbe)

α) Volltonpasten

In 135 g eines Firnis für Offsetdruckfarben, der ein mit Phenol modifiziertes Kollophoniumharz in Mineralöl gelöst enthält und eine Viskosität von 1,97 Pa.s aufweist, wurden 15 g Pigment a) bzw. b) in einem Dissolver mit einer Scheibe von 30 mm Durchmesser 15 Minuten bei 6 000 Upm dispergiert. Es wurde eine Probe entnommen (Probe 1). Anschließend wurde weitere 15 Minuten bei 12 000 und

nochmals weitere 15 Minuten bei 18 000 Upm dispergiert, wobei in beiden Fällen je eine Probe entnommen wurde (Proben 2 und 3). Die so erhaltene Dispersion wurde anschließend auf einem Dreiwalzenstuhl bei einem Anpreßdruck der Walzen von 60 × $10^5$ Pa in einer Passage und in 3 Passagen weiter angerieben. Auch hier wurde nach einer und nach 3 Passage je eine Probe entnommen (Proben 4 und 5).

β) Weißverschnitt

Von jeder Probe, die nach jeder den unter α) genannten Anreibestufen genommen wurde, wurde ein Weißverschnitt hergestellt :

10 g einer Standardweißpaste (Gehalt an Titandioxid 30 %) wurden mit 0,4 g der nach c α) erhaltenen Volltonpaste auf einem Tellerreiber mit 4 × 35 Umdrehungen bei 50 kg Belastung gemischt.

γ) Die erhaltenen Farben wurden mit einer Rakel auf Karton aufgetragen (Schichtdicke : 100 μm) und die Färbungen getrocknet. Die so erhaltenen Färbungen (Farbtiefe : 1/25 Richttyp = 1/25 RT) nach der FIAF-Methode (Dr. L. Gall, Farbe + Lack, Bd. 75, Seiten 854-862 (Sept. 69)) ausgewertet.

Ergebnisse :

| Probe | Farbeäquivalent der Färbung mit Pigment* | |
|---|---|---|
| | a) | b) (= Vergleich) |
| 1 | 160 | 422 |
| 2 | 130 | 345 |
| 3 | 116 | 260 |
| 4 | 104 | 155 |
| 5 | 100 | 138 |

* Farbstärke wurde als Färbeäquivalent (FÄ) bezogen auf Probe 5a) (= 100), angegeben.

Aus der Tabelle geht die wesentlich verbesserte Dispergierbarkeit der CuPc-Zubereitung gemäß der Erfindung deutlich hervor.

Die mit den Proben 5 erhaltenen Weißverschnitte wurden nach der FIAF-Methode farbmetrisch ausgewertet. Das Ergebnis ist in der Tabelle 1 zusammengestellt.

Tabelle 1

Coloristik der mit den Proben 5 erhaltenen Weißverschnitte (1/25 RT)

| | | AV | FÄ | T | S |
|---|---|---|---|---|---|
| Vergleichspigment | b | 9,06 | 138 | 18,05 | 4,09 |
| Pigment aus | a | 12,57 | 100 | 17,94 | 4,24 |

AV = Teile Weißpigment, die erforderlich sind, um in der Mischung die angegebene Farbtiefe (1/25 RT) zu erreichen.
FÄ = Färbeäquivalent 100 Teile Pigment (Probe 5a) entsprechend in der Farbstärke der angegebenen Menge des Vergleichs.
T = Farbton
S = Farbsättigung

Die Coloristik ist in CIE-Maßzahlen nach DIN 6164 (Normlichtart C) angegeben. Eine Differenz von 0,04 Einheiten werden sowohl bei T wie auch bei S vom Coloristen als deutlich unterscheidbar gewertet. Bei T bedeutet im vorliegenden Fall ein größerer Zahlenwert, daß der Farbton grüner bzw. ein kleiner Zahlenwert, daß der Farbton röter ist als der Vergleich. Bei S bedeutet ein größerer Zahlenwert eine höhere Reinheit des Farbtons.

Beispiele 2 bis 7

Es wurde wie in Beispiel 1 angegeben verfahren. Anstelle des angegebenen Harnstoffderivates wurden solche der Formel

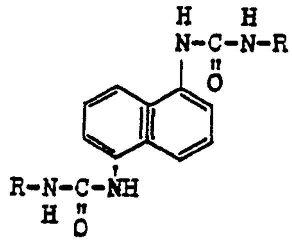

verwendet. Die verwendeten Mengen an Roh-CuPc und Harnstoffderivat sowie die Bedeutung von R sind in der folgenden Tabelle angegeben.

| Beispiel | R | Menge [kg] Harnstoff-derivat | Roh-CuPc |
|---|---|---|---|
| 2 | 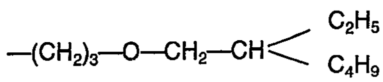 | 0,4 | 4,6 |
| 3 | $—C_{13}H_{27}$ | 0,3 | 4,7 |
| 4 | $—C_{18}H_{37}$ | 0,3 | 4,7 |
| 5 | $—(CH_2)_3—O—C_{16—19}H_{33—39}$* | 0,5 | 4,5 |
| 6 | $—(CH_2)_3—O—C_{9—11}H_{19—23}$* | 0,7 | 4,3 |
| 7 | $—(CH_2)_3—O—C_8H_{17}$ | 0,7 | 4,3 |

* Gemische

In allen Fällen wurden ähnliche Verbesserungen gegenüber dem Vergleichspigment von Beispiel 1 b) erzielt. Die Dispergierbarkeit, Farbstärke waren gegenüber dem Vergleich deutlich verbessert, die Körnigkeit deutlich geringer als beim Vergleich.

Beispiel 8

a) In einer Kugelmühle (Volumen 2,5 m³ ; Füllung 2 325 kg Eisenkugeln mit 2 bis 3 cm Durchmesser) wurden 270 kg chlorfreies Rohkupferphthalocyanin (β-Modifikation) und 30 kg des Harnstoffderivates der Formel

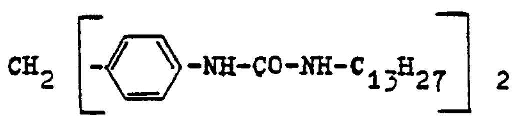

bei 80 °C gemahlen (Dauer : 25 Stunden). Das Mahlgut hat die gleichen Eigenschaften wie das nach Beispiel 1a erhaltene.

b) Das Vergleichspigment wurde nach a) jedoch in Abwesenheit des Harnstoffderivates hergestellt.

c) Die coloristische Prüfung

erfolgte entsprechend den Angaben des Beispiels 1 c), jedoch wurde bei c α) ein chemisch ähnlich aufgebauter Firnis verwendet, der eine Viskosität von 22,9 pa.s aufweist.

Die Volltonpasten wurden im Dissolver durch Dispergieren bei 18 000 upm (Dauer : 15 Min.) (Probe 1) und anschließender Dispergierung auf dem Walzenstuhl (Anpreßdruck : $60 \times 10^5$ Pa) mit 1 bzw. 3 Passagen (Proben 2 und 3) hergestellt.

Die weitere Prüfung wurde wie in Beispiel 1 c) unter β) und γ) angegeben durchgeführt.

Ergebnisse :

| Probe | Farbstärke der Färbung mit Pigment* a) | b) |
|---|---|---|
| 1 | 434 | 527 |
| 2 | 169 | 317 |
| 3 | 100 | 172 |

* Die Farbstärke wurde als Färbeäquivalent (FÄ) bezogen auf Pigment a) Probe 3 (= 100) bezogen.

Aus der Gegenüberstellung geht die überlegene Dispergierbarkeit der erfindungsgemäßen Zubereitung deutlich hervor.

Die mit den Proben 3 erhaltenen Weißverschnitte wurden nach der FIAF-Methode farbmetrisch ausgewertet. Das Ergebnis ist in der Tabelle 2 zusammengefaßt.

Tabelle 2

Coloristik der mit den Proben 3 erhaltenen Weißverschnitte.

| | AV | FÄ | T | S |
|---|---|---|---|---|
| Vergleichspigment 8 b) Probe 3 | 5,56 | 172 | 18,22 | 4,04 |
| Pigment aus 8 a) Probe 3 | 9,56 | 100 | 18,12 | 4,21 |

Erläuterungen zu AV, FÄ, T und S siehe Fußnote zu Tabelle 1, Beispiel 1 c)

## Beispiel 9

a) Es wurde wie in Beispiel 8 verfahren, jedoch anstelle des dort angegebenen Harnstoffderivats wurde eines der Formel

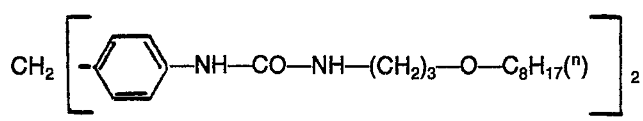

verwendet.

Gegenüber dem nach Beispiel 8 b) erhaltenen Vergleichspigment waren alle Mahlprodukte in der Dispergierbarkeit, der Farbstärke und der Körnigkeit verbessert.

## Beispiel 10

a) Zubereitung :

Es wird wie in Beispiel 1 a) verfahren, jedoch wird das Roh-CuPc durch die gleiche Menge rohes metallfreies Phthalocyanin ersetzt. Die erhaltene Zubereitung besteht aus bis zu 200 µm großen Agglomeraten, die aus 0,01 bis 0,05 µm großen Primärteilchen aufgebaut sind.

b) Das Vergleichspigment wird wie in Beispiel 1 b) angegeben hergestellt, jedoch auch hier das CuPc durch rohes metallfreies Phthalocyanin ersetzt.

c) Die coloristische Prüfung erfolgte entsprechend den Angaben in Beispiel 1 c). Aus den durch Anreiben im Dissolver und auf dem Dreiwalzenstuhl (3-Passagen bei $60 \times 10^5$ Pa Anpreßdruck der Walzen) erhaltenen Volltonpasten wurden entsprechend Beispiele 1) c β) Weißverschnitte hergestellt und die damit erhaltenen Färbungen farbmetrisch ausgewertet. Das Ergebnis ist in der Tabelle 3 zusammengestellt.

Tabelle 3

Coloristik der Weißverschnitte

| | AV | FÄ | T | S |
|---|---|---|---|---|
| Vergleichspigment 10 b) | 6,70 | 161,0 | 18,61 | 4,08 |
| Pigment aus 10 a) | 10,81 | 100,0 | 18,52 | 4,29 |

Erläuterungen zu AV, FÄ, T und S siehe Fußnote zu Tabelle 1, Beispiel 1 c).

**Ansprüche**

1. Phthalocyaninzubereitungen, dadurch gekennzeichnet, daß diese durch trockenes Mahlen von
   a) rohem Phthalocyanin und
   b) 2 bis 20 Gew.%, bezogen auf a), eines oder mehrerer Harnstoffderivate der allgemeinen Formel

$$K-(-NHCO-NH-R)_2 \qquad (I),$$

in der K 1,5-Naphthylen oder 4,4'-Diphenylenmethan und R $C_{12}$- bis $C_{18}$-Alkyl, $C_{12}$- bis $C_{18}$-Alkenyl oder 3-($C_8$- bis $C_{18}$-Alkoxy)-propyl, bedeuten, in Abwesenheit von Mahlhilfsmitteln erhalten werden.

2. Zubereitung gemäß Anspruch 1, dadurch gekennzeichnet, daß als Rohphthalocyanin rohes metallfreies Phthalocyanin oder rohes chlorfreies Kupferphthalocyanin verwendet wird.

3. Zubereitung gemäß Anspruch 1 oder 2, dadurch gekennzeichnet, daß der Gehalt an b) 5 bis 15 Gew.%, bezogen auf a), beträgt.

4. Zubereitung gemäß Anspruch 1 oder 2, dadurch gekennzeichnet, daß der Gehalt an b) 7 bis 12 Gew.%, bezogen auf a), beträgt.

5. Zubereitung gemäß Anspruch 1, 2, 3 oder 4, dadurch gekennzeichnet, daß man als b) Harnstoffderivate der im Anspruch 1 angegebenen Formel verwendet, in der R für $-C_{13}H_{27}$ oder $-(CH_2)_3-O-CH_2-\underset{\displaystyle C_2H_5}{\underset{|}{CH}}-C_4H_9(n)$ stehen und K die im Anspruch 1 angegebene Bedeutung hat.

6. Offsetdruckfarbe, enthaltend Phthalocyaninzubereitungen gemäß den Ansprüchen 1 bis 5.

**Claims**

1. A phthalocyanine formulation characterized in that it is obtained by dry milling of
   a) crude phthalocyanine with
   b) from 2 to 20 % by weight, based on a), of one or more urea derivatives of the general formula

$$K-(-NHCO-NH-R)_2 \qquad (I)$$

where K is 1,5-naphthylene or 4,4'-diphenylenemethane, and R is $C_{12}$-$C_{18}$-alkyl, $C_{12}$-$C_{18}$-alkenyl or 3-($C_8$-$C_{18}$-alkoxy)-propyl, in the absence of a grinding aid.

2. A formulation as claimed in claim 1, characterized in that the crude phthalocyanine used is crude metal-free phthalocyanine or crude chlorine-free copper phthalocyanine.

3. A formulation as claimed in claim 1 or 2, characterized in that the content of b) is from 5 to 15 % by weight, based on a).

4. A formulation as claimed in claim 1 or 2, characterized in that the content of b) is from 7 to 12 % by weight, based on a).

5. A formulation as claimed in claim 1, 2, 3 or 4, characterized in that there is used as b) a urea derivative of the formula given in claim 1, where R is $-C_{13}H_{27}$ or $-(CH_2)_3-O-CH_2-\underset{\displaystyle C_2H_5}{\underset{|}{CH}}-C_4H_9(n)$ and K has the meaning given in claim 1.

6. An offset printing ink containing a phthalocyanine formulation as claimed in claims 1 to 5.

**Revendications**

1. Préparations de phtalocyanine, caractérisées en ce qu'elles sont obtenues par broyage à sec de
   a) phtalocyanine brute et de
   b) 2 à 20 % en poids, par rapport à a), d'un ou de plusieurs dérivés de l'urée de formule générale

$$K-(-NHCO-NH-R)_2 \qquad (I)$$

dans laquelle K représente le 1,5-naphtylène ou le 4,4'-diphénylène-méthane et R un alcoyle en $C_{12}$ à $C_{18}$, un alcényle en $C_{12}$ à $C_{18}$ ou un 3-(alcoxy en $C_8$ à $C_{18}$)-propyle, en l'absence de produits auxiliaires de broyage.

2. Préparation selon la revendication 1, caractérisée en ce qu'on utilise, en tant que phtalocyanine brute, une phtalocyanine brute exempte de métal ou une phtalocyanine de cuivre brute exempte de chlore.

3. Préparation selon la revendication 1 ou 2, caractérisée en ce que la teneur en b) est comprise entre 5 et 15 % en poids par rapport à a).

4. Préparation selon la revendication 1 ou 2, caractérisée en ce que la teneur en B) est comprise entre 7 et 12 % en poids par rapport à a).

5. Préparation selon l'une quelconque des revendications 1 à 4, caractérisée en ce qu'on utilise, en tant que constituant b), des dérivés de l'urée répondant à la formule donnée dans la revendication 1, dans

laquelle R est mis pour $-C_{13}H_{27}$ ou $-(CH_2)_3-O-CH_2-\underset{\displaystyle C_2H_5}{\underset{|}{C}}H-C_4H_9(n)$ et K a la signification donnée dans la revendication 1.

6. Encre d'imprimerie offset, contenant des préparations de phtalocyanine selon l'une quelconque des revendications 1 à 5.